# EUROPEAN PATENT SPECIFICATION

(11) **EP 1 993 704 B1**
(45) Date of publication and mention of the grant of the patent: **06.10.2010**
(21) Application number: 06717111.6
(22) Date of filing: 14.03.2006
(51) Int. Cl.: B01D 46/10, F24F 13/28, F24F 3/16

(54) **AIR FILTER HOUSING WITH SEALING MEANS**
LUFTFILTERGEHÄUSE MIT DICHTUNGSMITTELN
BOITIER POUR FILTRE A AIR COMPORTANT UN MOYEN DE SCELLEMENT

(43) Date of publication of application: 26.11.2008
(73) Proprietor: CAMFIL AB, 619 33 Trosa (SE)
(72) Inventor: MAHLER, Axel, D-23858 Reinfeld (DE)
(74) Representative: Hyltner, Jan-Olof
(86) International application number: PCT/SE2006/050027
(87) International publication number: WO 2007/106001

(56) References cited:
- FR-A- 2 448 380
- US-A- 3 593 503
- US-A- 4 251 246
- US-A- 6 117 202
- US-A1- 2005 268 585
- US-B1- 6 638 332

## Description

### TECHNICAL FIELD

The present invention relates to an air filter housing having at least one filter chamber for receiving at least one filter unit, an access opening in a side wall of said housing leading to said filter chamber, a door for closing said access opening and a clamping device for holding said at least one filter unit in abutment against a first end wall of said filter chamber.

An example for such a filter housing is disclosed in US 4,251,246.

### BACKGROUND OF THE INVENTION

Filter housings according to the introduction are known from filtering devices for certain laboratories or the like in which there is a risk that the ambient air will be contaminated. In order to prevent air from such environment to leak out, such laboratories often are set under sub-pressure. The function of the filter is to capture all infectious particles or other contaminations, such as bugs or other air carried infectious organisms, in the circulated air. There is thus a risk that the filter unit will contain dangerous contaminations after the filtering device has been in operation. Before changing a filter unit it must therefore be ensured that the possible contaminations captured therein no longer are dangerous to human beings. This is done by letting a decontamination gas pass through the filter unit in order to kill all bacteria or other infectious or contagious organisms or the like. In known filter housings of the kind mentioned in the introduction there is nothing to stop filtered air or contamination gas to reach the region in the filter chamber surrounding the circumferential side walls of the filter unit and thereby there is a risk that the outside of the filter unit will be contaminated by infectious or contagious matter that has escaped being captured in the filter unit. However, since said region is outside the main stream of contamination gas it will take a rather long time before one can be sure that the contamination gas has reached or "leaked" into the whole of this region. It is also a risk that contaminated air or decontamination gas will leak out of the housing if sealings between the doors for the openings giving access to the filters are defective.

An objective of the present invention is to eliminate or at least further reduce the risk for air or gas leaking out through access openings to filter chambers. Another objective is to prevent the region outside the filter unit in the filter chamber from being contaminated, thereby getting rid of the necessity to fill this region with decontamination gas.

### SUMMARY OF THE INVENTION

This objective is accomplished by an air filter housing having at least one filter chamber for receiving at least one filter unit, an access opening in a side wall of said housing leading to said filter chamber, a door for closing said access opening and a clamping device for holding said at least one filter unit sealingly in abutment against a first end wall of said filter chamber, said clamping device includes a frame having a portion, which is sealingly in abutment with the filter unit when the latter is held by said clamping device, **characterised in that**, when a filter unit is held by said clamping device, a portion of said clamping device is sealingly in abutment with a circumferential portion of the wall of said housing in the second end of said filter chamber so that air or decontamination gas that has passed through the filter unit can not enter the filter chamber outside of the filter unit. By such a construction double security against dangerous leakage through access openings to filter chambers is achieved.

In a preferred embodiment a circumferential flange projects inwardly from the wall of said housing in the second end of said filter chamber. Further, said clamping device includes a frame which is movable back and forth in a direction from one end of the filter chamber towards the other end and which has a first tubular part having an outer circumference smaller than an inner circumference of said circumferential flange and a second tubular part having an outer circumference larger than said inner circumference of said circumferential flange, and means for moving said frame. The means for moving said frame can to advantage consist of at least three pneumatic cylinders. The pistons of said pneumatic cylinders are preferably spring biased towards a first end position in which the frame is in a clamping position. Said filter housing can to advantage include two filter chambers.

### BRIEF DESCRIPTION OF THE DRAWINGS

The invention shall now be described with reference to the enclosed Figures, of which;
Fig. 1 schematically discloses a perspective view of an air filter housing according to a preferred embodiment of the invention with the doors for the access openings to the two filter chambers being opened,
Fig. 2 schematically discloses a partly sectional side view of the air filter housing in Figure 1, and
Fig. 3 discloses a part of Figure 2 in an enlarged scale.

### DESCRIPTION OF EMBODIMENTS

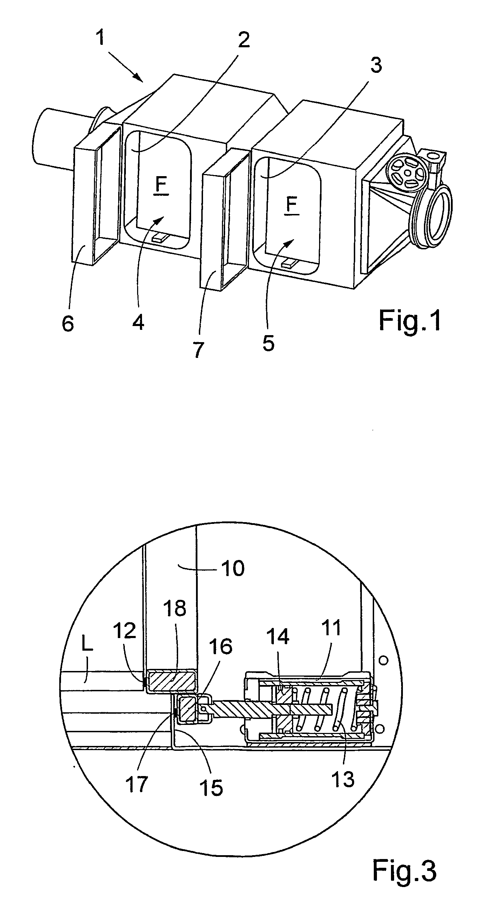

In Figure 1, a schematic perspective view of an air filter housing 1 according to a preferred embodiment of the present invention is shown. In the preferred embodiment, the housing includes two filter chambers 2,3 in each of which an air filter unit F is disposed. Access to filter chambers 2,3 is gained by access openings 4,5. These access openings are closable by doors 6,7 shown in their open position in Figure 1.

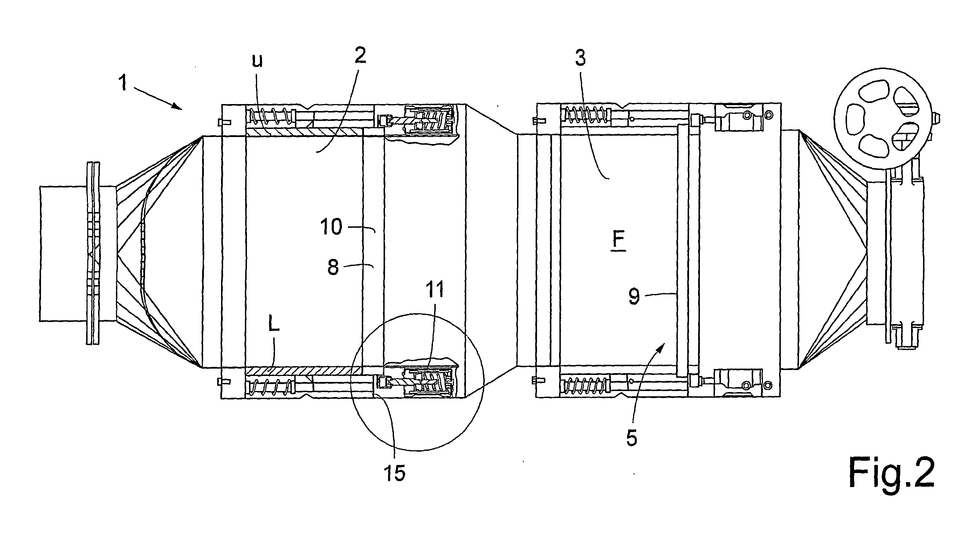

In Figure 2, the filter housing 1 is shown in a partially sectioned plan view seen from the side of the housing 1 containing the access openings 4,5. The doors 6,7 are not shown in Figure 2. As can be seen in Figure 2, each filter unit F comprises a circumferential wall surrounding the filter media and ensuring that air passing through the filter unit will not sidewise leak out of the filter unit but pass through the unit from one end to the other, i.e. in the longitudinal direction of the filter housing 1. In Figure 2 the upper U and lower part L of this circumferential wall of a filter unit F disposed within filter chamber 2 are shown. When the filter is in operation, the filter units F are held in the filter chambers 2,3 by clamping devices 8 and 9, respectively.

Clamping device 8 consists of a frame 10 which is movable back and forth in the flow direction of the air or gas passing through the filter unit F. In the preferred embodiment shown, the means for moving the frame 10 are four pneumatic cylinders 11, of which two are shown in Figure 2. These pneumatic cylinders can be disposed in the corners of the rectangular frame 10 or in pairs distanced from the corners on the upper and lower frame parts or the side parts of the frame. It is of course possible, but not preferred, to use more than four pneumatic cylinders and also possible to use three cylinders disposed in a triangular pattern. In Figure 2 and in Figure 3 which show a part of the filter housing in Figure 2 in a larger scale, the frame 10 is shown in its operative position. In its operative position, frame 10 presses the distal end of the filter unit F, i.e. the end being distal from the frame, against a first end wall of the filter chamber 2 and is itself pressed against the proximal end of the filter unit. The filter unit F is provided with sealing elements 12, such as sealing rings or the like, affixed to the opposite ends of the circumferential wall surrounding the filter media. The sealing element 12 affixed to the proximate end of the filter unit is shown in Figure 3. As is best seen in Figure 3, the frame 10 is biased towards the operative position by compression springs 13 acting on the piston 14 of each cylinder 11. The sealing elements 12 on each end of the filter unit F is somewhat compressed due to the compressive force from the springs 13 thereby ensuring that air entering the filter housing can not leak out between the first end wall of the filter chamber 2 and the distal end of the circumferential wall of a filter unit F placed in the filter chamber or between the proximal end of this wall and the frame 10. Each cylinder 11 also contains connections (not shown) to a pressure source for moving the pistons 14 against the force of the springs 13 and thereby move the frame 10 to the right in Figures 2 and 3 when a filter unit F placed within the filter chamber 2 is to be discharged and replaced by a fresh filter unit.

According to the present invention a circumferential flange 15 is projecting inwardly from the outer wall of the filter housing 1 in the second end of the filter chamber 2. In the operative position of the frame 10, a portion 16 of the frame 10 is in abutment with the flange 15 via a sealing element 17. The sealing element 17, for example an O-ring, can be affixed to flange 15 or frame 10. By this arrangement it is ensured that air or gas that have passed through the filter unit F placed within the filter chamber 2 can not enter the space outside the circumferential wall of the filter unit, i.e. the space to the left of flange 15 in Figure 3 or the space between the first end wall of the filter chamber and the flange 15 in Figure 2. This space contains the access opening 4 to the filter chamber. Thereby it is ensured that no contaminated air or decontamination gas will leak out of the access opening during operation of the filter or thereafter even if the sealing of the access opening is not tight. A double security is thus obtained by the present invention.

In order to be able to push a filter unit F towards the end wall of the filter chamber 2, i.e. to the left in Figures 1-3, the frame 10 has a first tubular part 18 having an outer circumference smaller than an inner circumference of the circumferential flange 15 and a second tubular part 16 having an outer circumference larger than the inner circumference of the circumferential flange 15, the second tubular part having a smaller longitudinal extension than the first tubular part 18 and being disposed in the portion of the frame 10 being proximal to the pneumatic cylinders 11. Thereby, the part 18 can be moved in the longitudinal direction without being obstructed by the flange 15. The width of the second tubular part 16 is chosen such as the O-ring 17 is compressed when the frame 10 is in operative position pressing the filter unit F against the first end wall of the filter chamber 2.

In the embodiment shown, the sealing element 17 co-operates with the flange 15. It is of course possible to instead of a flange make the outer wall of the filter housing co-operate with the sealing element, for example by making the portion of the outer wall defining the filter chamber having a smaller diameter than the outer diameter of the tubular part 16. Another possible way is to obtain a seal is to use a sealing lip radially extending from the frame 10 which is sealingly engaged with the outer wall of the filter housing also during the movements of the frame into and out of operative position.

The second filter chamber 3 is constructed the same way as filter chamber 2 and includes also a clamping device similar to the clamping device 10,11 described above.

A lot of modifications of the described embodiment can of course be made without leaving the scope of the present invention. For example, other actuating means than pneumatic cylinders can be used for manoeuvring the frame, such as manual actuated levers or the like, toggle links, etc. Furthermore, other types of sealing elements than O-rings can be used, such as sealing elements having one or several sealing lips. The frame need not be manufactured from two tubular parts affixed to each other but can consists of one piece of material having a L-shaped cross-section. The present invention shall therefore be limited only of the content of the enclosed patent claims.

## Claims

1. An air filter housing (1) having at least one filter chamber (2,3) for receiving at least one filter unit (F) being provided with sealing elements affixed to the opposite ends of the circumferential wall surounding the filter media, an access opening (4,5) in a side wall of said housing leading to said filter chamber, a door (6,7) for closing said access opening and a clamping device (10,11) for holding said at least one filter unit sealingly in abutment against a first end wall of said filter chamber, said clamping device includes a frame (10) having a portion (18), which is sealingly in abutment with the filter unit (F) when the rather is held by said clamping device (10, 11), **characterised in that,** when a filter unit (F) is held by said clamping device (10,11), a further portion (16) of said clamping device is sealingly in abutment with a circumferential portion (15) of the wall of said housing (1) in the second end of said filter chamber (2,3) so that air or decontamination gas that has passed through the filter unit (F) can not enter the filter chamber outside of the filter unit.

2. An air filter housing according to claim 1, wherein a circumferential flange (15) projects inwardly from the wall of said housing (1) in the second end of said filter chamber (2,3).

3. An air filter housing according to claim 2, wherein said clamping device (10,11) includes a frame (10) which is movable back and forth in a direction from one end of the filter chamber (2) towards the other end and which has a first tubular part (18) having an outer circumference smaller than an inner circumference of said circumferential flange (15) and a second tubular part (16) having an outer circumference larger than said inner circumference of said circumferential flange, and means (11) for moving said frame.

4. An air filter housing according to claim 3, wherein the means (11) for moving said frame consist of at least three pneumatic cylinders.

5. An air filter housing according to claim 4, wherein the pistons (14) of said pneumatic cylinders (11) are spring biased towards a first end position in which the frame (10) is in a clamping position.

6. An air filter housing according to any one of claims 1-5, wherein said filter housing includes two filter chambers (2,3).

## Patentansprüche

1. Luftfiltergehäuse (1) mit wenigstens einer Filterkammer (2,3) zur Aufnahme von wenigstens einer Filtereinheit (F), welche mit Dichtungselementen, welche an gegenüberliegenden Enden der Umfangswand, welche das Filtermedium umgibt, angebracht sind, versehen ist,
mit einer Zugangsöffnung (4,5) in einer Seitenwand des Filtergehäuses,
mit einer Tür (6,7), um die erwähnte Zugangsöffnung zu schließen,
und mit einer Klemmvorrichtung (10,11), um den wenigstens einen Filter dicht und bündig an einer ersten Abschlusswand der Filterkammer zu halten,
wobei die Klemmvorrichtung einen Rahmen (10) aufweist, welcher einen Abschnitt (18) aufweist, welcher dicht und bündig mit der Filtereinheit (F) abschließt, wenn die letztere von der Klemmvorrichtung (10,11) gehalten wird,
**dadurch gekennzeichnet, dass,**
wenn eine Filtereinheit (F) von der Klemmvorrichtung (10,11) gehalten wird, ein weiterer Abschnitt (16) der Klemmvorrichtung dicht und bündig mit einem Umfangsabschnitt (15) der Wand des Gehäuses (1) in dem zweiten Ende der Filterkammer (2,3) abschließt, so dass Luft oder Dekontaminationsgas, welches durch den Filter (F) geströmt ist, nicht in die außerhalb der Filtereinheit gelegene Filterkammer eintreten kann.

2. Luftfiltergehäuse nach Anspruch 1, wobei sich ein entlang des Umfangs ausgebildeter Flansch (15) nach innen von der Wand des Gehäuses (1) in dem zweiten Ende der Filterkammer (2,3) erstreckt.

3. Luftfiltergehäuse nach Anspruch 2, wobei die Klemmvorrichtung (10,11) einen Rahmen (10), welcher sich entlang der Richtung von einem Ende der Filterkammer (2) zum anderen Ende hin und her bewegen kann und welcher ein erstes röhrenförmiges Teil (18), welches einen Außenumfang aufweist, welcher kleiner als der Innenumfang des Flansches (15), welcher sich entlang des Umfangs erstreckt, und ein zweites röhrenförmiges Teil (16), welches einen Außenumfang aufweist, welcher größer als das Innenumfang des Flansches, welcher sich entlang des Umfangs erstreckt, aufweist, und Mittel (11), um den Rahmen zu bewegen, aufweist.

4. Luftfiltergehäuse nach Anspruch 3, wobei die Mittel (11), um den Rahmen zu bewegen, aus wenigstens drei pneumatischen Zylindern bestehen.

5. Luftfiltergehäuse nach Anspruch 4, wobei die Kolben (14) der pneumatischen Zylinder (11) durch Federn in eine Position am ersten Ende vorgespannt sind, in welcher der Rahmen (10) in einer festklemmenden Position ist.

6. Luftfiltergehäuse nach einem der Ansprüche 1-5, wobei das Filtergehäuse zwei Filterkammern (2,3) aufweist.

## Revendications

1. Boîtier de filtre à air (1) ayant au moins une chambre de filtre (2, 3) pour recevoir au moins une unité de filtre (F) qui est équipée d'éléments d'étanchéité fixés sur les extrémités opposées de la paroi circonférentielle entourant les matériaux filtrants, une ouverture de visite (4, 5) dans une paroi latérale dudit boîtier menant jusqu'à ladite chambre de filtre, une porte (6, 7) pour fermer ladite ouverture d'accès et un dispositif de serrage (10, 11) pour maintenir ladite au moins une unité de filtre en butée étanche contre une première paroi d'extrémité de ladite chambre de filtre, ledit dispositif de serrage comprend un châssis (10) ayant une partie (18), qui est en butée étanche avec l'unité de filtre (F) lorsque le filtre est maintenu par ledit dispositif de serrage (10, 11), **caractérisé en ce que**, lorsqu'une unité de filtre (F) est maintenue par ledit dispositif de serrage (10, 11), une partie supplémentaire (16) dudit dispositif de serrage est en butée étanche avec une partie circonférentielle (15) de la paroi dudit boîtier (1) dans la seconde extrémité de ladite chambre de filtre (2, 3) de sorte que l'air ou le gaz de décontamination qui est passé à travers l'unité de filtre (F) ne peut pas entrer dans la chambre de filtre à l'extérieur de l'unité de filtre.

2. Boîtier de filtre à air selon la revendication 1, dans lequel un rebord circonférentiel (15) fait saillie vers l'intérieur à partir de la paroi dudit boîtier (1) dans la seconde extrémité de ladite chambre de filtre (2, 3).

3. Boîtier de filtre à air selon la revendication 2, dans lequel ledit dispositif de serrage (10, 11) comprend un châssis (10) qui peut être mobile en arrière et en avant dans une direction allant d'une extrémité de la chambre de filtre (2) vers l'autre extrémité et qui a une première partie tubulaire (18) ayant une circonférence externe plus petite qu'une circonférence interne dudit rebord circonférentiel (15) et une seconde partie tubulaire (16) ayant une circonférence externe supérieure à ladite circonférence interne dudit rebord circonférentiel, et des moyens (11) pour déplacer ledit châssis.

4. Boîtier de filtre à air selon la revendication 3, dans lequel les moyens (11) pour déplacer ledit châssis se composent d'au moins trois cylindres pneumatiques.

5. Boîtier de filtre à air selon la revendication 4, dans lequel les pistons (14) desdits cylindres pneumatiques (11) sont sollicités à ressort vers une première position d'extrémité dans laquelle le châssis (10) est dans une position de serrage.

6. Boîtier de filtre à air selon l'une quelconque des revendications 1 à 5, dans lequel ledit boîtier de filtre comprend deux chambres de filtre (2, 3).
